# EUROPEAN PATENT APPLICATION

(11) **EP 4 277 438 A1**
(43) Date of publication of application: **15.11.2023**
(21) Application number: 21918563.4
(22) Date of filing: 15.01.2021
(51) Int. Cl.: H04W 88/08

(54) **COMMUNICATION METHOD AND APPARATUS, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: XU, Yang, Dongguan, Guangdong 523860 (CN)
(74) Representative: Ipside
(86) International application number: PCT/CN2021/072181
(87) International publication number: WO 2022/151357

(57) **Abstract**

Methods and apparatuses for communication, devices, and a storage medium are provided in the disclosure. The disclosure relates to the field of mobile communication. The method includes the following. Receive a first container transmitted by a first device, where the first container contains a first request message, and the first request message is used to request invocation of a service of a second device. Transmit the first container to the second device. A first network element serves as a bridge for communication between the first device and the second device to realize transmission of a container, such that the first device can invoke the service provided by the second device, which breaks through the limitation that only network elements in a core network can invoke services provided by network elements, and expands the scope of services provided by the core network, thereby improving communication.

## Description

### TECHNICAL FIELD

This disclosure relates to the field of mobile communications, and particularly to methods and apparatuses for communication, devices, and a storage medium.

### BACKGROUND

With the rapid development of mobile communication technologies, in a core network of a mobile communication network, one network element can provide services for another network element, to realize interaction between the two network elements.

Network elements in the core network communicate with each other through interface invocation, for example, a first network element transmits a request message to a second network element, and the second network element determines a reply message according to the request message received, and transmits the reply message to the first network element, so that the second network element can provide services for the first network element.

However, only network elements in the core network can interact with each other to invoke services provided by network elements, which has limitations.

### SUMMARY

Implementations of the disclosure provide methods and apparatuses for communication, devices, and a storage medium, which breaks through the limitation that only network elements in a core network can invoke services provided by network elements, expands a scope of services provided by the core network, and accordingly improves communication. The technical solution is as follows.

According to an aspect of the disclosure, a method for communication is provided. The method is applicable to a first network element and includes the following. Receive a first container transmitted by a first device, where the first container contains a first request message, and the first request message is used to request invocation of a service of a second device. Transmit the first container to the second device.

According to an aspect of the disclosure, a method for communication is provided. The method is applied to a first device and includes the following. Transmit a first container to a first network element, where the first container contains a first request message, and the first request message is used to request invocation of a service of a second device. The first network element is configured to receive the first container transmitted by the first device and transmit the first container to the second device.

According to an aspect of the disclosure, a method for communication is provided. The method is applied to a second device and includes the following. Receives a first container transmitted by a first network element, where the first container contains a first request message, the first request message is transmitted by a first device and used to request invocation of a service of the second device, and the first request message is recognizable by the second device.

According to an aspect of the disclosure, a method for communication is provided. The method is applicable to a first network element and includes the following. Receive a first request message transmitted by a first device. Generate a second request message according to the first request message, where the second request message is used to request invocation of a service of a second device. Transmit the second request message to the second device.

According to an aspect of the disclosure, a method for communication is provided. The method is applicable to a first device and includes the following. Transmit a first request message to a first network element, where the first request message is used to request invocation of a service of a second device, the first network element is configured to receive the first request message transmitted by the first device, generate a second request message according to the first request message, and transmit the second request message to the second device, and the second request message is used to request invocation of the service of the second device.

According to an aspect of the disclosure, a method for communication is provided. The method is applicable to a second device and includes the following. Receive a second request message transmitted by a first network element, where the first network element is configured to receive a first request message transmitted by a first device, generate the second request message according to the first request message, and transmit the second request message to the second device, and the second request message is used to request invocation of a service of the second device.

According to an aspect of the disclosure, a method for communication is provided. The method is applicable to a terminal device or a base station. The terminal device or the base station is provided with a service interface, where the service interface is configured to connect the terminal device or the base station with a second network element in a core network. The method includes the following. Transmit a request message to the second network element by invoking the service interface, where the request message is used to invoke a service provided by the second network element. Receive a reply message for the request message by invoking the service interface, where the reply message for the request message is transmitted by the second network element.

According to an aspect of the disclosure, a method for communication is provided. The method is applicable to a second network element. A terminal device or a base station is provided with a service interface, where the service interface is configured to connect the terminal device or the base station with the second network element in a core network. The method includes the following. Receive, by invoking the service interface, a request message transmitted by the terminal device or the base station, where the request message is used to invoke a service provided by the second network element. Transmit, by invoking the service interface, a reply message for the request message to the terminal device or the base station that transmits the request message.

According to an aspect of the disclosure, an apparatus for communication is provided. The apparatus is applicable to a first network element and includes a receiving module and a transmitting module. The receiving module is configured to receive a first container transmitted by a first device, where the first container contains a first request message, and the first request message is configured to request invocation of a service of a second device. The transmitting module is configured to transmit the first container to the second device.

According to an aspect of the disclosure, an apparatus for communication is provided. The apparatus is applicable to a first device and includes a transmitting module. The transmitting module is configured to transmit a first container to a first network element, where the first container contains a first request message, and the first request message is used to request invocation of a service of a second device. The first network element is configured to receive the first container transmitted by the first device, and transmit the first container to the second device.

According to an aspect of the disclosure, an apparatus for communication is provided. The apparatus is applicable to a second device and includes a receiving module. The receiving module is configured to receive a first container transmitted by a first network element, where the first container contains a first request message, the first request message is transmitted by a first device and used to invoke a service of the second device, and the first request message is recognizable by the second device.

According to an aspect of the disclosure, an apparatus for communication is provided. The apparatus is applicable to a first network element and includes a receiving module, a generating module, and a transmitting module. The receiving module is configured to receive a first request message transmitted by a first device. The generating module is configured to generate a second request message according to the first request message, where the second request message is used to request invocation of a service of a second device. The transmitting module is configured to transmit the second request message to the second device.

According to an aspect of the disclosure, an apparatus for communication is provided. The apparatus is applied to a first device and includes a transmitting module. The transmitting module is configured to transmit a first request message to a first network element, where the first request message is used to request invocation of a service of a second device, the first network element is configured to receive the first request message transmitted by the first device, generate a second request message according to the first request message, and transmit the second request message to the second device, and the second request message is used to request invocation of a service of the second device.

According to an aspect of the disclosure, an apparatus for communication is provided. The apparatus is applicable to a second device and includes a receiving module. The receiving module is configured to receive a second request message transmitted by a first network element, where the first network element is configured to receive a first request message transmitted by the first device, generate the second request message according to the first request message, and transmit the second request message to the second device, and the second request message is used to request invocation of a service of the second device.

According to an aspect of the disclosure, an apparatus for communication is provided. The apparatus is applicable to a terminal device or a base station. The terminal device or the base station is provided with a service interface, where the service interface is configured to connect the terminal device or the base station with a second network element in a core network. The apparatus includes a transmitting module and a receiving module. The transmitting module is configured to transmit a request message to the second network element by invoking the service interface, where the request message is used to invoke a service provided by the second network element. The receiving module is configured to receive a reply message for the request message by invoking the service interface, where the reply message for the request message is transmitted by the second network element.

According to an aspect of the disclosure, an apparatus for communication is provided. The apparatus is applied to a second network element. A terminal device or a base station is provided with a service interface, where the service interface is configured to connect the terminal device or the base station with the second network element in a core network. The apparatus includes a receiving module and a transmitting module. The receiving module is configured to receive, by invoking the service interface, a request message transmitted by the terminal device or the base station, where the request message is used to invoke a service provided by the second network element. The transmitting module is configured to transmit, by invoking the service interface, a reply message for the request message to the terminal device or the base station that transmits the request message.

According to an aspect of the disclosure, a network element is provided. The network element includes a processor, a transceiver coupled with the processor, and a memory storing executable program codes for the processor. The processor is configured to load and execute the executable program codes to implement the methods for communication in the above aspects.

According to an aspect of the disclosure, a first device is provided. The first device includes a processor, a transceiver coupled with the processor, and a memory storing executable instructions for the processor. The processor is configured to load and execute the executable instructions to implement the methods for communication in the above aspects.

According to an aspect of the disclosure, a second device is provided. The second device includes a processor, a transceiver coupled with the processor, and a memory storing executable instructions for the processor. The processor is configured to load and execute the executable instructions to implement the methods for communication in the above aspects.

According to an aspect of the disclosure, a computer-readable storage medium is provided. The computer-readable storage medium stores executable program codes, where the executable program codes are loaded and execute by a processor to implement the methods for communication in the above aspects.

According to an aspect of the disclosure, a chip is provided. The chip includes a programmable logic circuit and/or program instructions. When the chip is run on a communication device, the methods for communication in the above aspects are implemented.

According to an aspect of the disclosure, the implementations of the disclosure provide a computer program product. The computer program product is executed by a processor of a communication device to implement the methods for communication in the above aspects.

The technical solutions provided in the implementations of the disclosure has at least the following beneficial effect. In the methods, apparatuses, devices, and a storage medium provided in the implementations of the disclosure, in the case where the first device needs to invoke a service of the second device, the first device makes a request message be contained in a container, and the first network element serves as a bridge for communication between the first device and the second device to realize transmission of the container, such that invocation of the service of the second device by the first device is realized, which breaks through the limitation that only network elements in the core network can invoke services provided by network elements, and expands the scope of services provided by the core network, thereby improves communication.

In addition, in the case where the first device needs to invoke the service of the second device, the first device transmits the request message to the first network element, and the first network element serves as a bridge for communication between the first device and the second device, generates the second request message according to the request message, and transmits to the second device the second request message for invocation of the service of the second device, such that invocation of the service of the second device by the first device is realized, which breaks through the limitation that only network elements in the core network can invoke services provided by network elements, and expands the scope of services provided by the core network, thereby improving communication.

Moreover, the terminal device or the base station is provided with the service interface, and communicates with a network element in the core network through the service interface. The terminal device or the base station realizes invocation of the service provided by the network element in the core network by invoking the service interface, which breaks through the limitation that only network elements in the core network can invoke services provided by network elements, and expands the scope of services provided by the core network, thereby improving communication.

### BRIEF DESCRIPTION OF THE DRAWINGS

In order to clearly illustrate technical solutions in implementations of the disclosure, the accompanying drawings that are used for illustration of the implementations will be briefly introduced below. Obviously, the accompanying drawings in the following merely illustrate some implementations of the disclosure. Those skilled in the art can obtain other accompanying drawings based on these drawings without creative effort.
FIG. 1 is a schematic structural diagram of a network architecture provided in an exemplary implementation of the disclosure.
FIG. 2 is a flow chart of a method for information transmission provided in implementations of the disclosure.
FIG. 3 is a flow chart of a method for information transmission provided in an exemplary implementation of the disclosure.
FIG. 4 is a flow chart of a method for information transmission provided in an exemplary implementation of the disclosure.
FIG. 5 is a flow chart of a method for information transmission provided in an exemplary implementation of the disclosure.
FIG. 6 is a flow chart of a method for information transmission provided in an exemplary implementation of the disclosure.
FIG. 7 is a flow chart of a method for information transmission provided in implementations of the disclosure.
FIG. 8 is a flow chart of a method for information transmission provided in an exemplary implementation of the disclosure.
FIG. 9 is a flow chart of a method for information transmission provided in an exemplary implementation of the disclosure.
FIG. 10 is a schematic structural diagram of a network architecture provided in an exemplary implementation of the disclosure.
FIG. 11 is a flow chart of a method for information transmission provided in an exemplary implementation of the disclosure.
FIG. 12 is a block diagram of an apparatus for communication provided in an exemplary implementation of the disclosure.
FIG. 13 is a block diagram of an apparatus for information transmission provided in an exemplary implementation of the disclosure.
FIG. 14 is a block diagram of an apparatus for communication provided in an exemplary implementation of the disclosure.
FIG. 15 is a block diagram of an apparatus for communication provided in an exemplary implementation of the disclosure.
FIG. 16 is a block diagram of an apparatus for communication provided in an exemplary implementation of the disclosure.
FIG. 17 is a block diagram of an apparatus for communication provided in an exemplary implementation of the disclosure.
FIG. 18 is a block diagram of an apparatus for communication provided in an exemplary implementation of the disclosure.
FIG. 19 is a block diagram of an apparatus for communication provided in an exemplary implementation of the disclosure.
FIG. 20 is a block diagram of an apparatus for communication provided in an exemplary implementation of the disclosure.
FIG. 21 is a block diagram of an apparatus for communication provided in an exemplary implementation of the disclosure.
FIG. 22 is a block diagram of an apparatus for communication provided in an exemplary implementation of the disclosure.
FIG. 23 is a block diagram of an apparatus for communication provided in an exemplary implementation of the disclosure.
FIG. 24 is a schematic structural diagram of a communication device provided in an exemplary implementation of the disclosure.

### DETAILED DESCRIPTION

In order to make purposes, technical solutions, and advantages of the disclosure clearer, the following will further describe in detail implementations of the disclosure with reference to the accompanying drawings.

An application scenario of the disclosure is first illustrated.

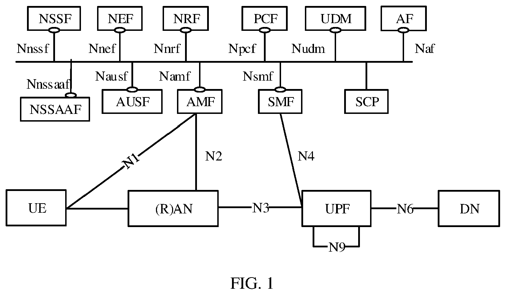

Methods provided in implementations of the disclosure is applied in a fifth generation (5G) network architecture. For example, as illustrated in FIG. 1, the 5G network architecture includes a user equipment (UE), an access network (AN), and a user plane function (UPF) network element, a data network (DN), a network slice specific authentication and authorization function (NSSAAF) network element, an authentication server function (AUSF) network element, an access management function (AMF) network element, a session management function (SMF) network element, a signaling control point (SCP) network element, a network slice selection function (NSSF) network element, a network exposure function (NEF) network element, a network repository function (NRF) network element, a policy control function (PCF) network element, a unified data management (UDM) network element, an application function (AF), etc. Various devices are connected via the architecture as illustrated in FIG. 1.

The UE and the AN perform access-stratum connection, to exchange access-stratum messages and perform data transmission. The AN 12 includes several network devices 120. The network device 120 may be a base station, where the base station is deployed in the AN to provide the UE with wireless communication functions. The base station may include various forms of a macro base station, a micro base station, a relay station, an access point, etc. In systems adopting different radio access technologies, names of devices with a base-station function may be different, for example, the device with a base-station function is called eNodeB or eNB in a long term evolution (LTE) system, or called gNodeB or gNB in a 5G NR-based access to unlicensed spectrum (NR-U) system. With the evolution of communication technologies, the illustration of the "base station" may vary. To facilitate illustration of the implementations of the disclosure, the foregoing devices for providing the UE 13 with wireless communication functions are generally called AN devices.

Terminals may include various devices with wireless communication functions such as handheld devices, in-vehicle devices, wearable devices, computing devices or other processing devices connected with a wireless modem, as well as various forms of UEs, mobile stations (MS), terminal devices, and the like. For ease of illustration, the devices mentioned above are collectively referred to as terminals. The AN devices and the terminals communicate with each other through a certain air-interface technology, such as a Uu interface.

The technical solutions in the implementations of the disclosure can be applicable to various communication systems, for example, a global system of mobile communication (GSM), a code division multiple access (CDMA) system, a wideband code division multiple access (WCDMA) system, a general packet radio service (GPRS) system, an LTE system, an LET frequency division duplex (FDD) system, an LTE time division duplex (TDD) system, an advanced LTE (LTE-A) system, a new radio (NR) system, an evolved system of the NR system, an LTE-based access to unlicensed spectrum (LTE-U) system, an NR-U system, a universal mobile telecommunication system (UMTS), a worldwide interoperability for microwave access (WiMAX), a wireless local area network (WLAN), a wireless fidelity (Wi-Fi), a next generation system, or other communication systems.

Generally speaking, a conventional communication system supports a limited number of connections and therefore is easy to implement. However, with development of communication technology, a mobile communication system not only supports conventional communication but also supports, for example, device to device (D2D) communication, machine to machine (M2M) communication, machine type communication (MTC), vehicle to vehicle (V2V) communication, a vehicle to everything (V2X) system, etc. The implementations of the disclosure can be applicable to these communication systems.

In addition, the UE and the AMF perform non-access stratum connection to exchange an NAS message. The NAS message may be an uplink/downlink NAS transport message, or other NAS messages. The AMF performs mobility management on the UE, the SMF is responsible for session management on the UE, and the AMF is also responsible for forwarding session management messages between the UE and the SMF. The PCF is responsible for formulating policies related to mobility management, session management, charging, etc. of the UE. The UPF is connected with a base station and an external data network for data transmission.

In addition, when a certain network element in a core network needs to invoke a certain service, the network element may first interact with the NRF to obtain network element information for invocation of the service, and then interact with a network element corresponding to the network element information obtained to realize invocation of the service.

In some implementations, the service architecture includes two types of services. A first type of service is that after receiving a request message, a service provider returns once a reply message for the request message and then ends the process. A second type of service is that after receiving a request message, a service provider not only returns a reply message according to the request message, but also can return reply messages many times subsequently.

Different network elements in the disclosure provide different services, and the services provided by different network elements will be described below by way of example.

For example, the AMF network element provides services as illustrated in Table 1.

**Table 1**

| **Service Name** | **Service Description** |
|---|---|
| Namf_Communication | Enables an NF consumer to communicate with the UE and/or the AN through the AMF. |
| | This service enables SMF to request EBI allocation to support interworking with evolved packet system (EPS). |
| Namf_EventExposure | Enables other NF consumers to subscribe or get notified of the mobility related events and statistics. |
| Namf_MT | Enables an NF consumer to make sure that UE is reachable. |
| Namf_Location | Enables an NF consumer to request location information for a UE. |

For another example, the PCF network element provides services as illustrated in Table 2.

**Table 2**

| **Service Name** | **Description** |
|---|---|
| Npcf_AMPolicyControl | This PCF service provides access control, network selection and mobility management related policies, UE route selection policies to the NF consumers. |
| Npcf_SMPolicyControl | This PCF service provides session related policies to the NF consumers. |
| Npcf_Policy Authorization | This PCF service authorises an AF request and creates policies as requested by the authorised AF for the packet data unit (PDU) Session to which the AF session is bound to. This service allows the NF consumer to subscribe/unsubscribe to the notification of access type and RAT type, PLMN identifier, access network information, usage report etc. |
| Npcf_BDTPolicyControl | This PCF service provides background data transfer policy negotiation and optionally notification for the renegotiation to the NF consumers. |
| Npcf_UEPolicyControl | This PCF service provides the management of UE policy association to the NF consumers. |
| Npcf_EventExposure | This PCF service provides the support for event exposure. |

For another example, the core network also includes a network data analysis function (NWDAF) network element. The NWDAF network element collects data from each network element and a network management system of the core network for big-data statistics, analysis or intelligent data analysis, and derives network-side analysis or prediction data to assist each network element in controlling UE access based on data analysis results. As illustrated in Table 3, the NWDAF network element can provide the following services.

**Table 3**

| **Analytics Information** | **Request Description** | **Response Description** |
|---|---|---|
| Slice load level information | Analytics ID: load level information | Load level of a network slice instance reported either as notification of crossing of a given threshold or as periodic notification (if no threshold is provided). |
| Observed service experience information | Analytics ID: service experience | Observed service experience statistics or predictions may be provided for a network slice or an application. They may be derived from an individual UE, a group of UEs or any UE. For slice service experience, they may be derived from an application, a set of applications or all applications on the network slice. |
| NF load information | Analytics ID: NF load information | Load statistics or predictions information for specific NF(s). |
| Network performance information | Analytics ID: Network performance | Statistics or predictions on the load in an area of interest; in addition, statistics or predictions on the number of UEs that are located in that area of interest. |
| UE mobility information | Analytics ID: UE mobility | Statistics or predictions on UE mobility. |
| UE communication information | Analytics ID: UE communication | Statistics or predictions on UE communication. |
| Expected UE behavioural parameters | Analytics ID: UE mobility and/or UE communication | Analytics on UE mobility and/or UE communication. |
| UE abnormal behaviour information | Analytics ID: Abnormal behaviour | List of observed or expected exceptions, with exception ID, exception level and other information, depending on the observed or expected exceptions. |
| User Data Congestion information | Analytics ID: User data congestion | Statistics or predictions on the user data congestion for transfer over the user plane, for transfer over the control plane, or for both. |
| Qualtiy of service (QoS) sustainability | Analytics ID: QoS sustainability | For statistics, the information on the location and the time for the QoS change and the threshold(s) that were crossed; or, for predictions, the information on the location and the time when a potential QoS change may occur and what threshold(s) may be crossed. |

In the implementations of the disclosure, by adding an analytics ID to a request message, after receiving the request message, the NWDAF network element can perform a corresponding operation based on the analytics ID and obtain an analysis result corresponding to the analytics ID.

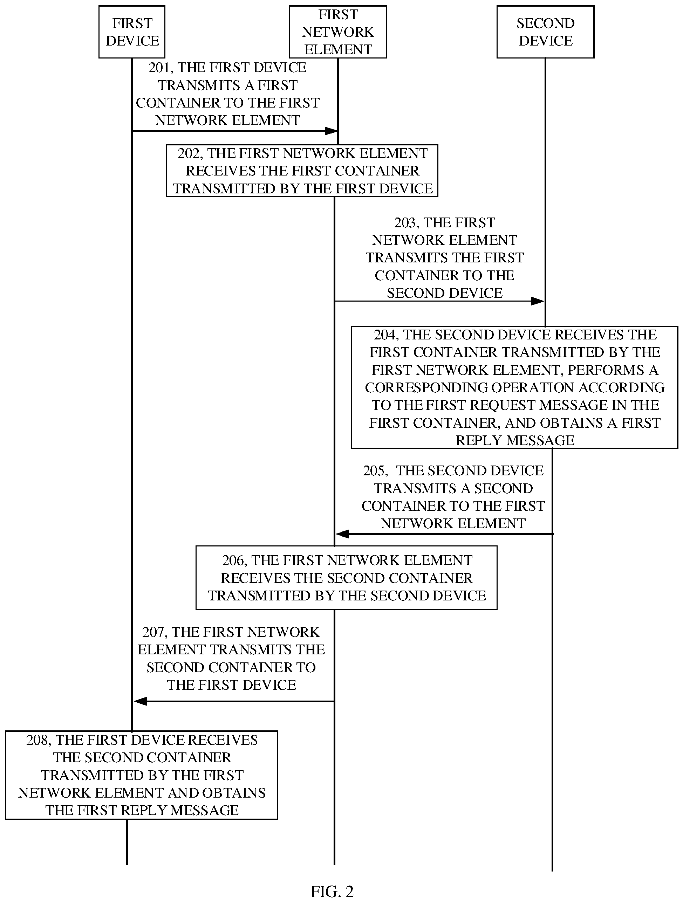

FIG. 2 is a flow chart of a method for information transmission provided in an exemplary implementation of the disclosure. The method is applicable to a first network element, a first device, and a second device. The method includes at least part of the following.

At 201, the first device transmits a first container to the first network element.

The first container contains a first request message, where the first request message is used to request invocation of a service of the second device. It is to be noted that, in the implementation of the disclosure, the container containing the request message may be construed as that the request message is encapsulated in the container.

In the implementation of the disclosure, in the case where the first device needs to invoke the service of the second device, the first device needs to transmit the first request message to the second device, where the first request message is used to request invocation of the service of the second device. To transmit the first request message to the second device, the first device makes the container contain the first request message, so that transmission of the first request message can be realized by transmission of the container.

Since the first device and the second device cannot directly interact with each other, the first device and the second device communicate with each other through the first network element, and interaction between the first device and the second device is realized through the first network element. The first network element may be an AMF network element, or may be other network elements, and the implementation of the disclosure is not limited in this regard.

It is to be noted that, before the operation at 201, in the case where the first device needs to invoke the service of the second device, the first device first generates the first request message, and places the first request message in the first container.

For example, in the case where the second device is an NWDAF network element, the request message generated by the first device may be a Nnwdaf_AnalyticsInfo_Request, or may be other messages, and the implementation of the disclosure is not limited in this regard.

In some implementations, the first request message is recognizable by the second device. The first request message being recognizable by the second device indicates that during transmission of the first request message, there is no need to process the first request message, and the first request message can be directly transmitted to the second device. The second device recognizes the first request message, and determines a reply message for the first request message.

In some implementations, in the case where the first device needs to communicate with the second device to invoke the service of the second device, the first device first determines the first request message for the service provided by the second device, makes the first container contain the first request message, and then transmits the first container to the first network element.

The first container may be a payload container (a container of one type), or containers of other types.

It is to be noted that the first device in the implementation of the disclosure may be a terminal device or a base station. In the case where the first device is a terminal device, the terminal device transmits the first container to the first network element via an NAS message. In the case where the first device is a base station, the first device transmits the first container to the first network element via a message on an N2 interface. The message on the N2 interface is based on an NG application (NGAP) protocol, for example, the message on the N2 interface is an uplink/downlink random access network (RAN) configuration transfer message or a newly defined message.

At 202, the first network element receives the first container transmitted by the first device.

At 203, the first network element transmits the first container to the second device.

After receiving the first container transmitted by the first device, the first network element determines the second device according to the first container, and then transmits the first container to the second device.

In some implementations, the first network element determines the second device according to identification information of the second device contained in a message header of the first container, and then transmits the first container to the second device.

The message header of the first container transmitted from the first device to the first network element contains the identification information of the second device. After receiving the first container, the first network element determines the second device according to the identification information in the message header of the first container, and then transmits the first container to the second device determined.

In some other implementations, the first network element determines the second device according to the first request message contained in the first container, and transmits the first container to the second device.

The first request message contained in the first container transmitted by the first device contains the identification information of the second device. After receiving the first container transmitted by the first device, the first network element parses the first container to determine the first request message contained in the first container, determines the second device according to the first request message, and then transmits the first container to the second device.

It is to be noted that in the implementation of the disclosure, transmission of the first container from the first network element to the second device can be realized through a forwarding function of the first network element. For example, the first network element forwards the first container to the second device. Alternatively, other manners may be used to realize transmission of the first container from the first network element to the second device, and the implementation of the disclosure is not limited in this regard.

At 204, the second device receives the first container transmitted by the first network element, performs a corresponding operation according to the first request message in the first container, and obtains a first reply message.

In the implementation of disclosure, the second device obtains the first request message from the first container received, determines the service invoked via the first request message, performs the corresponding operation according to the service determined, and then obtains the first reply message for the first request message.

For example, the operation corresponding to the first request message may be a service operation, or may be other operations, and the implementation of the disclosure is not limited in this regard.

At 205, the second device transmits a second container to the first network element.

The second container contains the first reply message for the first request message.

In the implementation of disclosure, after receiving the first container transmitted by the first network element, the second device obtains the first reply message for the first request message in the first container, encapsulates the first reply message in the second container, and then transmits the second container to the first network element.

For example, in the case where the second device is an NWDAF network element, the request message generated by the first device may be a Nnwdaf_AnalyticsInfo_Response, or may be other messages, and the implementation of the disclosure is not limited in this regard.

At 206, the first network element receives the second container transmitted by the second device.

At 207, the first network element transmits the second container to the first device.

After receiving the second container transmitted by the second device, the first network element determines the first device according to the second container, and then transmits the second container to the first device.

In some implementations, the first network element determines the first device according to identification information of the first device contained in a message header of the second container, and transmits the second container to the first device.

The message header of the second container transmitted by the second device to the first network element contains the identification information of the first device. After receiving the second container, the first network element determines the first device according to the identification information contained in the message header of the second container, and then transmits the second container to the first device determined.

In other implementations, the first device is determined according to the first reply message contained in the second container, and then the second container is transmitted to the first device.

The first reply message contained in the second container transmitted by the second device contains the identification information of the first device. After receiving the second container transmitted by the second device, the first network element parses the second container to determine the first reply message contained in the second container, determines the first device according to the first reply message, and then transmits the second container to the first device.

At 208, the first device receives the second container transmitted by the first network element and obtains the first reply message.

After receiving the second container transmitted by the first network element, the first device can obtain the first reply message for the first request message from the second container to realize invocation of the service of the second device.

It is noted that in the implementation of the disclosure, one of the first device and the second device is a network element in a core network, and the other of the first device and the second device is a terminal device or a base station.

In some implementations, the first device is a network element in the core network and the second device is a terminal device or a base station. Alternatively, the first device is a terminal device or a base station and the second device is a network element in the core network.

In the case where the second device is a network element in the core network, the second device may be an NWDAF network element, an SMF network element, or other network elements, and the implementation of the disclosure is not limited in this regard.

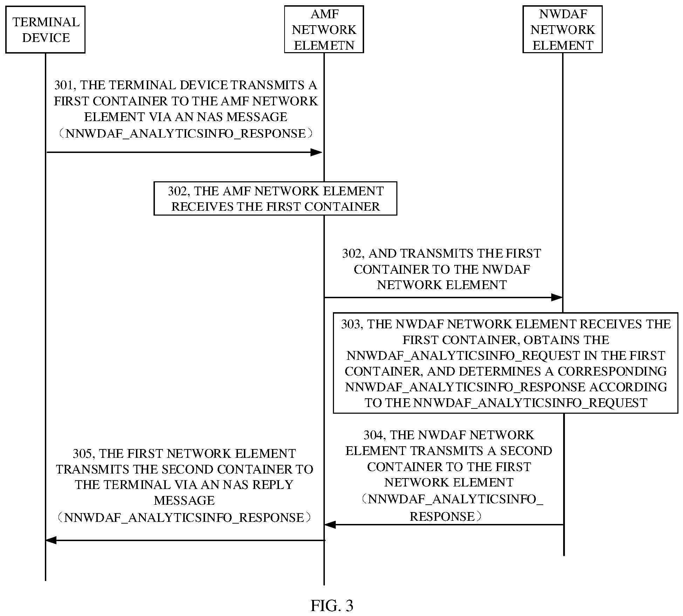

In the following, for example, the first device is a terminal device, the first network element is an AMF network element, and the second device is an NWDAF network element. For example, as illustrated in FIG. 3, the method includes the following.

At 301, the terminal device transmits a first container to the AMF network element via an NAS message.

The first container contains a request message for a service, where the request message can be received and is recognizable by an interface of the NWDAF network element. The request message is a Nnwdaf_AnalyticsInfo_Request.

At 302, the AMF network element receives the first container and transmits the first container to the NWDAF network element.

At 303, the NWDAF network element receives the first container, obtains the Nnwdaf_AnalyticsInfo_Request in the first container, and determines a corresponding Nnwdaf_AnalyticsInfo_Response according to the Nnwdaf_AnalyticsInfo_Request.

At 304, the NWDAF network element transmits a second container to the first network element.

The second container contains the Nnwdaf_AnalyticsInfo_Response.

It is noted that in the implementation of the disclosure, transmission of the first container by the AMF network element to the second device may be realized through a forwarding function of the AMF network element. For example, the AMF network element forwards the first container to the second device, or transmission of the first container by the AMF network element to the second device can also be realized in other manners, and the implementation of the disclosure is not limited in this regard.

At 305, the first network element transmits the second container to the terminal device via an NAS reply message.

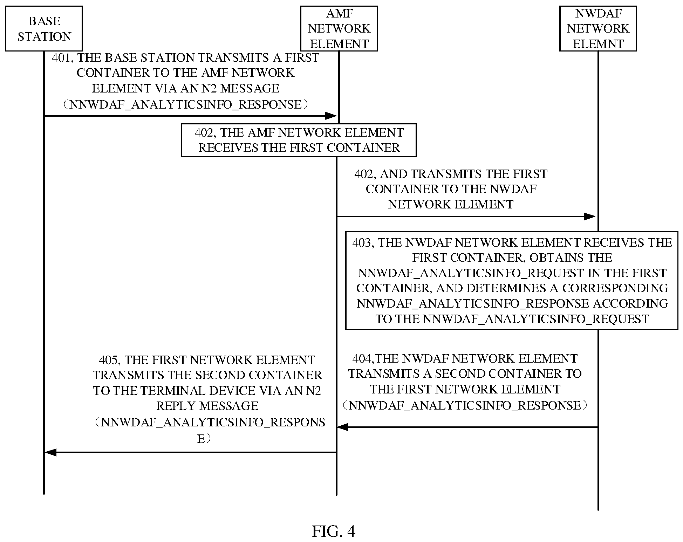

For another example, the first device is a base station, the first network element is an AMF network element, and the second device is an NWDAF network element. As illustrated in FIG. 4, the method includes the following.

At 401, the base station transmits a first container to the AMF network element via an N2 message.

The first container contains a request message for a service, where the request message can be received and is recognizable by an interface of the NWDAF network element. The request message is Nnwdaf_AnalyticsInfo_Request.

At 402, the AMF network element receives the first container, and transmits the first container to the NWDAF network element.

At 403, the NWDAF network element receives the first container, obtains the Nnwdaf_AnalyticsInfo_Request in the first Container, and determines a corresponding Nnwdaf_AnalyticsInfo_Response according to the Nnwdaf_AnalyticsInfo_Request.

At 404, the NWDAF network element transmits a second container to the first network element.

The second container contains the Nnwdaf_AnalyticsInfo_Response.

At 405, the first network element transmits the second container to the terminal device via an N2 reply message.

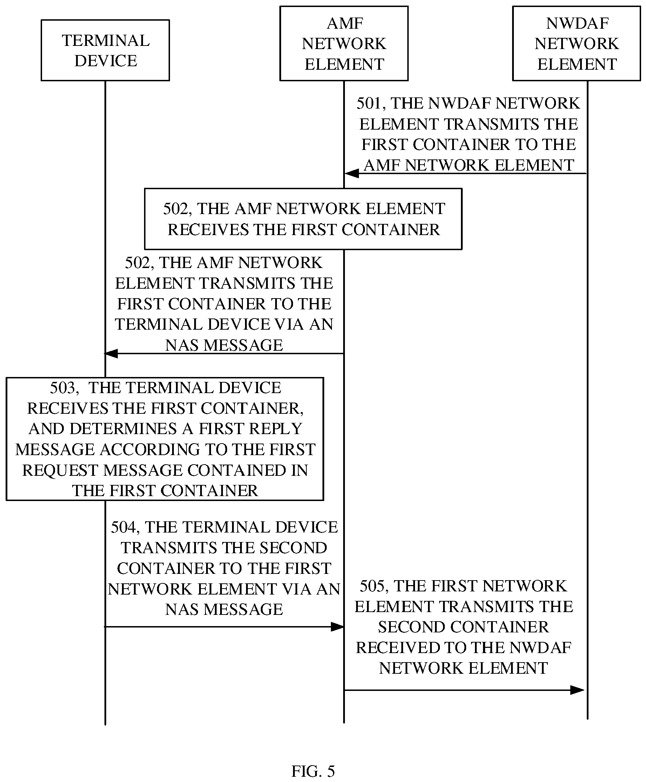

In addition, in the implementation of disclosure, in the case where the first device is a network element in the core network, and the second device is a terminal device or a base station, an interaction process between the first device and the second device is similar to the above process. For example, as illustrated in FIG. 5, the first device is an NWDAF network element and the second device is a terminal device, and the method includes the following.

At 501, the NWDAF network element transmits the first container to the AMF network element.

The first container contains a first request message recognizable by the terminal device.

At 502, the AMF network element receives the first container, and transmits the first container to the terminal device via an NAS message.

At 503, the terminal device receives the first container, and determines a first reply message according to the first request message contained in the first container.

At 504, the terminal device transmits the second container to the first network element via an NAS message.

The second container contains a second reply message.

At 505, the first network element transmits the second container received to the NWDAF network element.

In the methods provided in the implementations of the disclosure, in the case where the first device needs to invoke a service of the second device, the first device makes a container contain a request message, and the first network element serves as a bridge for communication between the first device and the second device to realize transmission of the container, such that invocation of the service of the second device by the first device is realized, which breaks through the limitation that only network elements in the core network can invoke services provided by network elements, and expands a scope of services provided by the core network, thereby improving communication.

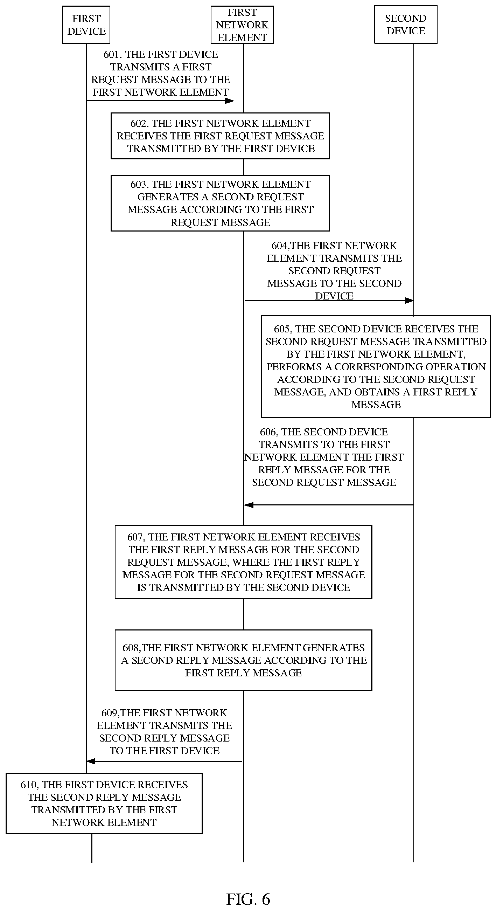

In some implementations, when the first device communicates with the second device, it is not necessary to make a request message be contained in a container, and the first network element performs conversion on a request message and a reply message to realize communication between the first device and the second device. FIG. 6 is a flow chart of a method for information transmission provided in an exemplary implementation of the disclosure, which is applicable to a first network element, a first device, and a second device. The method includes at least part of the following.

At 601, the first device transmits a first request message to the first network element.

At 602, the first network element receives the first request message transmitted by the first device.

In the implementation of disclosure, in the case where the first device needs to invoke a service of the second device, the first device needs to transmit the first request message to the first network element, and the first network element invokes the service of the second device according to the first request message.

It is to be noted that before the operation at 601, the first device may generate the first request message according to the service to be invoked, where the first request message is used to invoke the service of the second device.

In some implementations, the first request message contains at least one of an invoked service type or identification information of the second device.

The invoked service type indicates the type of the service invoked by the first device. For example, the type of the service is a quality of service (QoS) measurement result, a subscription service, or other types of services.

The identification information of the second device indicates the second device, and the first network element determines, according to the identification information, the device the service of which is invoked by the first device.

At 603, the first network element generates a second request message according to the first request message.

In the implementation of the disclosure, after the first network element receives the first request message transmitted by the first device, if it needs to transmit the first request message to the second device, the first network element needs to generate the second request message according to the first request message, where the second request message is used for communication with the second device. The second request message is used to request invocation of the service of the second device.

For example, after receiving the first request message, the first network element determines that the first request message is used to request invocation of the service of the second device, then generates the second request message according to the first request message, and invokes the service of the second device via the second request message.

In some implementations, after receiving the first request message, the first device first determines the second device according to the first request message, and then generates the second request message according to the second device determined and the first request message.

In a possible implementation manner, after receiving the first request message, the first network element first invokes other services to determine the second device, and then transmits the request message to the second device.

The other services invoked by the first network element may include a network-element discovery service provided by an NRF network element.

In another possible implementation manner, the first network element can also determine the second device according to content carried in the first request message, and subsequently transmits the request message to the second device.

For example, the first network element determines the second device according to identification information of the second device carried in the request message.

In some implementations, the first request message is unrecognizable by the second device. After receiving the first request message, the first network element needs to convert the first request message into the second request message recognizable by the second device. The second device can then determine a reply message according to the second request message.

For example, in the case where the second device is an SMF network element, the second request message may be a Nsmf EventExposure_subscribe, or other messages, and the implementation of the disclosure is not limited in this regard.

At 604, the first network element transmits the second request message to the second device.

After generating the second request message according to the first request message, the first network element transmits the second request message to the second device.

At 605, the second device receives the second request message transmitted by the first network element, performs a corresponding operation according to the second request message, and obtains a first reply message.

After receiving the second request message, the second device determines a corresponding service operation according to the second request message, and then performs the service operation determined, and obtains the first reply message for the second request message.

For example, in the case where the second device is the SMF network element, the first reply message may be a Nsmf_EventSubscribe_Notify, or other messages, and the implementation of the disclosure is not limited in this regard.

At 606, the second device transmits to the first network element the first reply message for the second request message.

At 607, the first network element receives the first reply message for the second request message, where the first reply message for the second request message is transmitted by the second device.

After receiving the second request message, the second device can perform a corresponding operation according to the second request message, obtain the first reply message for the second request message, and then transmit the first reply message to the first network element.

At 608, the first network element generates a second reply message according to the first reply message.

The second reply message is a reply message for the first request message.

In the implementation of the disclosure, after receiving the first reply message for the second request message, the first network element needs to generate the second reply message according to the second reply message, and then transmits the second reply message to the first device.

In some implementations, the first reply message is unrecognizable by the first device. Therefore, after receiving the first reply message, the first network element first converts the first reply message into the second reply message recognizable by the first device, and then transmits the second reply message to the first device.

At 609, the first network element transmits the second reply message to the first device.

At 610, the first device receives the second reply message transmitted by the first network element.

After receiving the second reply message, the first device obtains data contained in the second reply message to realize invocation of the service of the second device, thereby realizing communication with the second device.

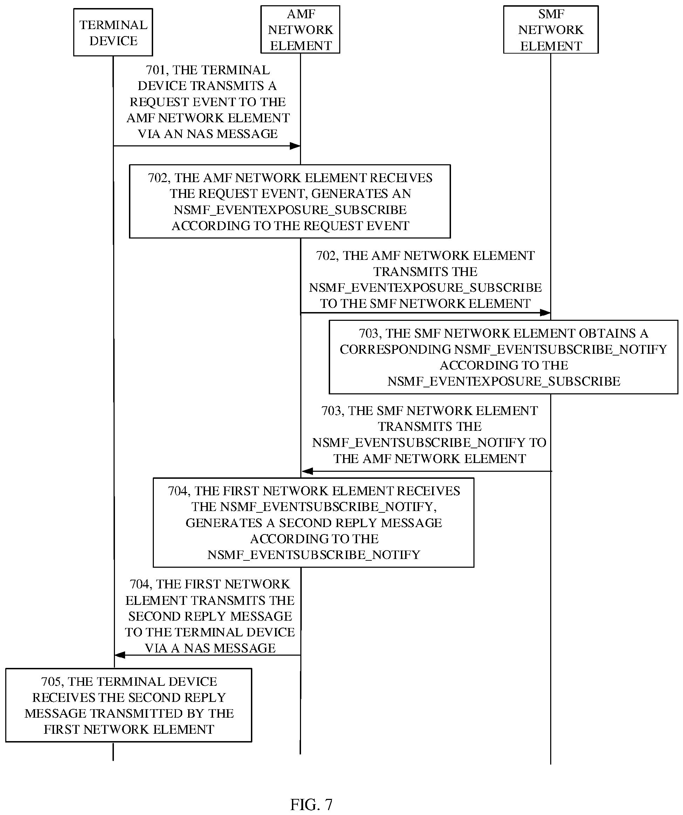

The following takes that the first device is a terminal device, the first network element is an AMF network element, and the second device is an SMF network element as an example for illustration. In the implementation of the disclosure, the first network element being an AMF network element is just an example for illustration, and the first network element may be other network elements, and the second device being an SMF network element is also an example for illustration, and the second device may be other network elements. For example, as illustrated in FIG. 7, the method includes the following.

At 701, the terminal device transmits a request event to the AMF network element via an NAS message.

At 702, the AMF network element receives the request event, generates an Nsmf_EventExposure_subscribe according to the request event, and transmits the Nsmf_EventExposure_subscribe to the SMF network element.

At 703, the SMF network element obtains a corresponding Nsmf_EventSubscribe_Notify according to the Nsmf_EventExposure_subscribe, and transmits the Nsmf_EventSubscribe_Notify to the AMF network element.

For example, in the case where the second request message is used to request QoS measurement, a first reply message transmitted by the SMF network element contains a QoS measurement result.

At 704, the first network element receives the Nsmf_EventSubscribe_Notify, generates a second reply message according to the Nsmf_EventSubscribe_Notify, and transmits the second reply message to the terminal device via an NAS message.

At 705, the terminal device receives the second reply message transmitted by the first network element.

For another example, the first device may also be a base station, and an interaction process between the base station and the SMF network element through the AMF network element is similar to the above-mentioned interaction process between the terminal device and the SMF network element through the AMF network element, and will not be repeated here.

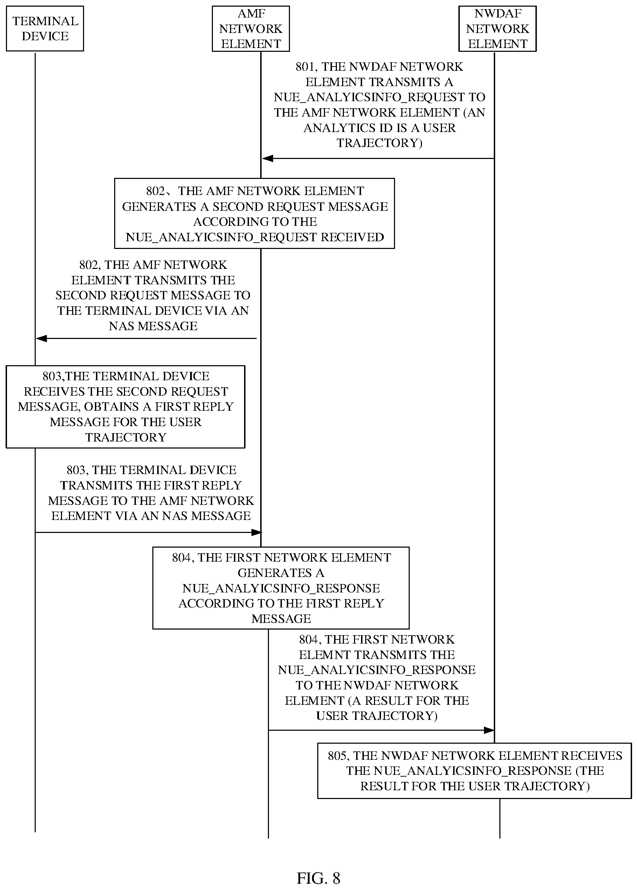

In addition, in the implementation of the disclosure, in the case where the first device is a network element in the core network, and the second device is a terminal device or a base station, an interaction process between the first device and the second device is similar to the above process. For example, the first device is an NWDAF network element, the first network element is an AMF network element, and the second device is a terminal device. In the implementation of the disclosure, the first network element being the AMF network element is only an example for illustration, and the first network element may be other network elements, and the first device being the NWDAF element is also an example for illustration, and the first device may be other network elements. As illustrated in FIG. 8, the method includes the following.

At 801, the NWDAF network element transmits a Nue_AnalyicsInfo_Request to the AMF network element.

An analytics ID contained in the Nue_AnalyicsInfo_Request is a user trajectory.

At 802, the AMF network element generates a second request message according to the Nue_AnalyicsInfo_Request received, and transmits the second request message to the terminal device via an NAS message.

The analytics ID contained in the second request message is the user trajectory.

At 803, the terminal device receives the second request message, obtains a first reply message for the user trajectory, and transmits the first reply message to the AMF network element via an NAS message.

At 804, the first network element generates a Nue_AnalyicsInfo_ReSponse according to the first reply message, and transmits the Nue_AnalyicsInfo_ReSponse to the NWDAF network element.

The Nue_AnalyicsInfo_ReSponse contains a result for the user trajectory.

At 805, the NWDAF network element receives the Nue_AnalyicsInfo_ReSponse.

It is to be noted that, in the implementation of the disclosure, what is illustrated is merely that the NWDAF network element invokes the user trajectory of the terminal device, and the NWDAF network element can also invoke other data of the terminal device or the base station, and the implementation of the disclosure is not limited in this regard.

In the methods provided in the implementations of the disclosure, in the case where the first device needs to invoke a service of the second device, the first device transmits a request message to the first network element, and the first network element serves as a bridge for communication between the first device and the second device, generates the second request message according to the request message, and transmits to the second device the second request message for invocation of the service of the second device, such that invocation of the service of the second device by the first device is realized, which breaks through the limitation that only network elements in the core network can invoke services provided by network elements, and expands the scope of services provided by the core network, thereby improving communication.

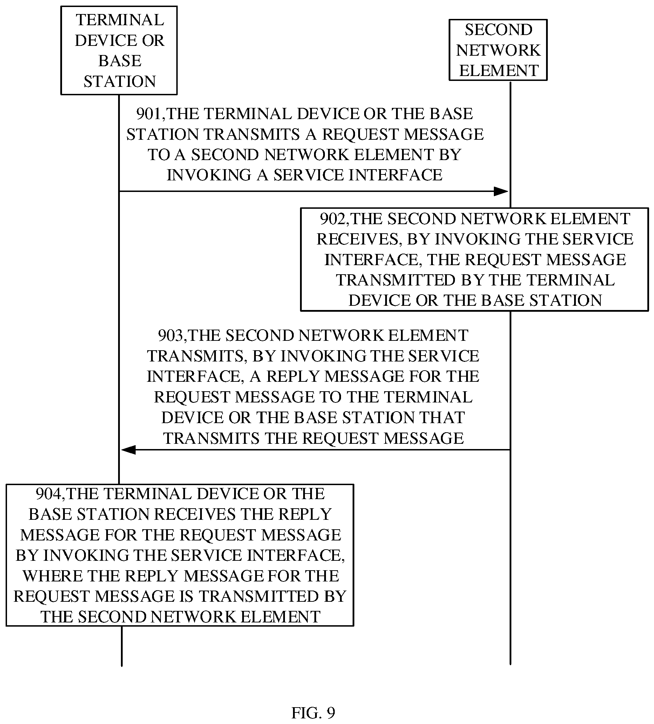

In other implementations, a terminal device or a base station can also serve as a part of a service structure of a core network. The terminal device or the base station is also provided with a service interface, and the terminal device or the base station can communicate with a network element in the core network by invoking the service interface. FIG. 9 is a flow chart of a method for information transmission provided in an exemplary implementation of the disclosure. Referring to FIG. 9, the method includes the following.

At 901, a terminal device or a base station transmits a request message to a second network element by invoking a service interface.

At 902, the second network element receives, by invoking the service interface, the request message transmitted by the terminal device or the base station.

In the implementation of the disclosure, the terminal device or the base station is provided with the service interface, and the service interface can connect the terminal device or the base station with the second network element in the core network, and the terminal device or the base station interacts with the second network element by invoking the service interface, thereby realizing invocation of a service provided by the second network element.

At 903, the second network element transmits, by invoking the service interface, a reply message for the request message to the terminal device or the base station that transmits the request message.

At 904, the terminal device or the base station receives the reply message for the request message by invoking the service interface, where the reply message for the request message is transmitted by the second network element.

In some implementations, the service interface is a service based interface (SBI)

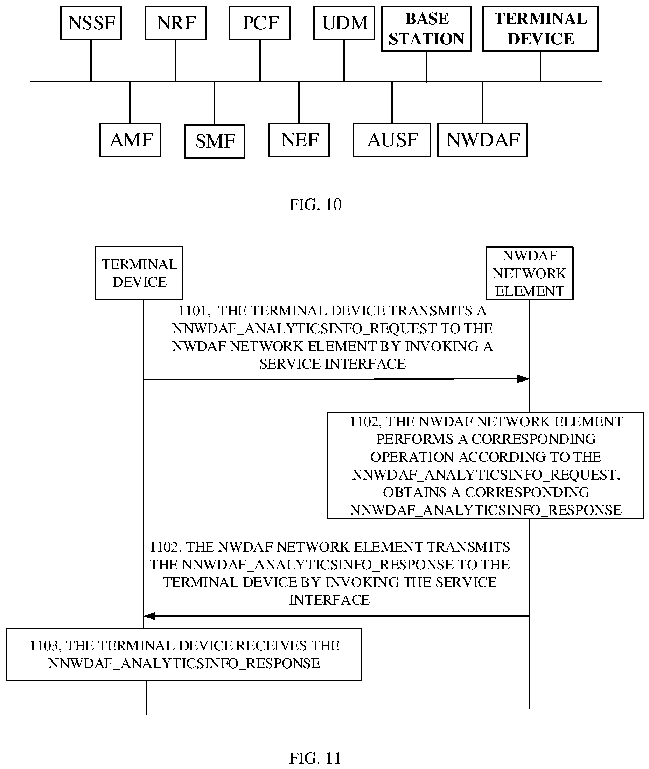

For example, as illustrated in FIG. 10, the base station and the terminal device each are provided with a service interface, and the base station and the terminal device can invoke respective service interfaces to communicate with other network elements in the core network, and thus interaction can be realized without forwarding of the first network element.

In the following, the disclosure will be described by way of example. For example, a network element in a core network is an NWDAF network element, and a terminal device invokes a service of the NWDAF network element. Referring to FIG. 11, the method includes the following.

At 1101, the terminal device transmits a Nnwdaf_AnalyticsInfo_Request to the NWDAF network element by invoking a service interface.

The Nnwdaf_AnalyticsInfo_Request may contain at least one of an analytics ID, an analytics-report target, or an analytics target time, or may also contain other parameters, and the implementation of the disclosure is not limited in this regard.

It is to be noted that in the disclosure, the request message being the Nnwdaf_AnalyticsInfo_Request is merely taken as an example for illustration, and the terminal device may transmit other request messages, and the implementation of the disclosure is not limited in this regard.

At 1102, the NWDAF network element performs a corresponding operation according to the Nnwdaf_AnalyticsInfo_Request, obtains a corresponding Nnwdaf_AnalyticsInfo_Response, and transmits the Nnwdaf_AnalyticsInfo_Response to the terminal device by invoking the service interface.

At 1103, the terminal device receives the Nnwdaf_AnalyticsInfo_Response.

The Nnwdaf_AnalyticsInfo_Response may contain the analytics ID and corresponding parameters, or may contain other parameters, and the implementation of the disclosure is not limited in this regard.

It is to be noted that in the disclosure, the reply message being the Nnwdaf_AnalyticsInfo_Request is merely taken as an example for illustration, and the terminal device can transmit other reply messages, and the implementation of the disclosure is not limited in this regard

It is to be noted that, the implementation of the disclosure is illustrated by merely taking that the terminal device or the base station invokes a service of the second network element in the core network through the service interface as an example. In another implementation, the second network element in the core network can also invoke a service of the terminal device or the base station through the service interface, where the invoking manner is similar to the above-mentioned manner in which the terminal device or the base station invokes the service of the second network element, and will not be repeated herein.

In the methods provided in the implementation of the disclosure, the terminal device or the base station is provided with the service interface, is connected with a network element in the core network through the service interface, and invokes the service provided by the network element in the core network by invoking the service interface, which breaks through the limitation that only network elements in the core network can invoke services provided by network elements, and expands the scope of services provided by the core network, thereby improving communication.

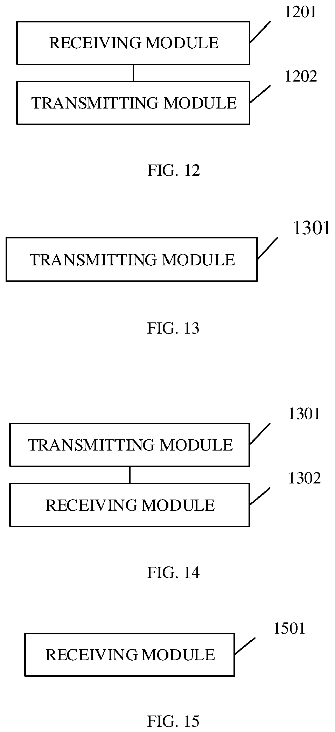

FIG. 12 is a block diagram of an apparatus for communication provided in an exemplary implementation of the disclosure. The apparatus is applied to a first network element and includes a receiving module 1201 and a transmitting module 1202. The receiving module 1201 is configured to receive a first container transmitted by a first device, where the first container contains a first request message, and the first request message is used to request invocation of a service of a second device. The transmitting module 1202 is configured to transmit the first container to the second device.

In some implementations, the transmitting module 902 is configured to determine the second device according to identification information of the second device contained in a message header of the first container, and transmit the first container to the second device. Alternatively, the transmitting module 902 is configured to determine the second device according to the first request message contained in the first container, and transmit the first container to the second device.

In some implementations, the apparatus further includes the following. The receiving module 1201 is configured to receive a second container transmitted by the second device, where the second container contains a first reply message for the first request message. The transmitting module 1202 is configured to transmit the second container to the first device.

In some implementations, the transmitting module 1202 is configured to determine the first device according to identification information of the first device contained in a message header of the second container, and transmit the second container to the first device. Alternatively, the transmitting module 1202 is configured to determine the first device according to the first reply message contained in the second container, and transmit the second container to the first device.

In some implementations, the first request message is recognizable by the second device.

In some implementations, one of the first device and the second device is a network element in a core network, and the other of the first device and the second device is a terminal device or a base station.

FIG. 13 is a block diagram of an apparatus for communication provided in an exemplary implementation of the disclosure. The apparatus is applied to a first device and includes a transmitting module 1301. The transmitting module 1301 is configured to transmit a first container to a first network element, where the first container contains a first request message, the first request message is used to request invocation of a service of a second device, and the first network element is configured to receive the first container transmitted by the first device and transmit the first container to the second device.

In some implementations, referring to FIG. 14, the apparatus further includes a receiving module 1302 configured to receive a second container transmitted by the first network element, where the second container contains a first reply message for the first request message.

In some implementations, the first request message is recognizable by the second device.

In some implementations, one of the first device and the second device is a network element in a core network, and the other of the first device and the second device is a terminal device or a base station.

FIG. 15 is a block diagram of an apparatus for communication provided in an exemplary implementation of the disclosure. The apparatus is applied to a second device and includes a receiving module 1501 configured to receive a first container transmitted by a first network element, where the first container contains a first request message, the first request message is transmitted by a first device and used to request invocation of a service of the second device, and the first request message is recognizable by the second device. One of the first device and the second device is a network element in a core network, and the other of the first device and the second device is a terminal device or a base station.

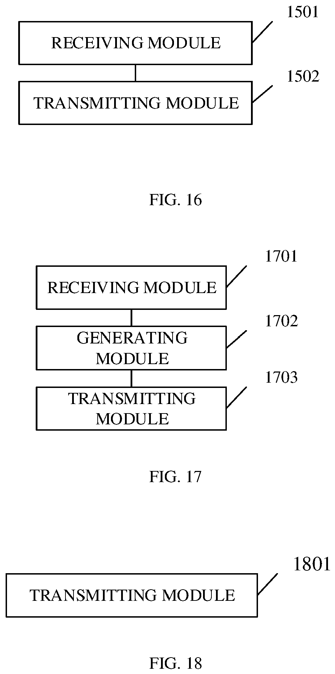

In some implementations, referring to FIG. 16, the apparatus further includes a transmitting module 1502 configured to transmit a second container to the first network element, where the second container contains a first reply message for the first request message.

In some implementations, the first request message is recognizable by the second device.

In some implementations, one of the first device and the second device is a network element in a core network, and the other of the first device and the second device is a terminal device or a base station.

FIG. 17 is a block diagram of an apparatus for communication provided in an exemplary implementation of the disclosure. The apparatus is applied to a first network element and includes a receiving module 1701, a generating module 1702, and a transmitting module 1703. The receiving module 1701 is configured to receive a first request message transmitted by a first device. The generating module 1702 is configure to generate a second request message according to the first request message, where the second request message is used to request invocation of a service of a second device. The transmitting module 1703 is configured to transmit the second request message to the second device.

In some implementations, the first request message is unrecognizable by the second device, and the second request message is recognizable by the second device.

In some implementations, the first request message contains at least one of an invoked service type or identification information of a service provider.

In some implementations, the apparatus further includes the following. The receiving module 1701 is configured to receive a first reply message for the second request message, where the first reply message for the second request message is transmitted by the second device. The generating module 1702 is configured to generate a second reply message according to the first reply message, where the second reply message is a reply message for the first request message. The transmitting module 1703 is configured to transmit the second reply message to the first device.

In some implementations, the first reply message is unrecognizable by the first device, and the second reply message is recognizable by the first device.

In some implementations, one of the first device and the second device is a network element in a core network, and the other of the first device and the second device is a terminal device or a base station.

FIG. 18 is a block diagram of an apparatus for communication provided in an exemplary implementation of the disclosure. The apparatus is applied to a first device and includes a transmitting module 1801 configured to transmit a first request message to a first network element, where the first request message is used to request invocation of a service of a second device, the first element is configured to receive the first request message transmitted by the first device, generate a second request message according to the first request message, and transmit the second request message to the second device, and the second request message is used to request invocation of the service of the second device.

In some implementations, the first request message is unrecognizable by the second device, and the second request message is recognizable by the second device.

In some implementations, the first request message contains at least one of an invoked service type or identification information of the second device.

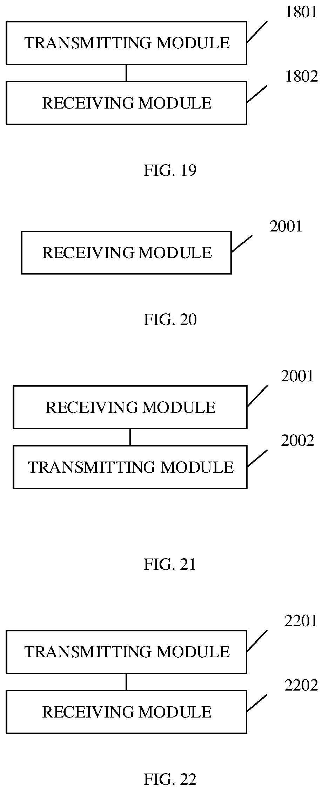

In some implementations, referring to FIG. 19, the apparatus further includes a receiving module 1802 configured to receive a second reply message transmitted by the first network element, where the second reply message is generated by the first network element according to a first reply message, and the first rely message is a reply message for the second request message and is received by the first network element from the second device.

In some implementations, the first reply message is unrecognizable by the first device, and the second reply message is recognizable by the first device.

In some implementations, one of the first device and the second device is a network element in a core network, and the other of the first device and the second device is a terminal device or a base station.

FIG. 20 is a block diagram of an apparatus for communication provided in an exemplary implementation of the disclosure. The apparatus is applied to a second device and includes a receiving module 2001 configured to receive a second request message transmitted by a first network element, where the first network element is configured to receive a first request message transmitted by a first device, generate the second request message according to the first request message, and transmit the second request message to a second device, and the second request message is used to request invocation of a service of the second device.

In some implementations, the first request message is unrecognizable by the second device, and the second request message is recognizable by the second device.

In some implementations, the first request message contains at least one of an invoked service type or identification information of the second device.

In some implementations, referring to FIG. 21, the apparatus further includes the following. The transmitting module 2002 is configured to transmit to the first network element a first reply message for the second request message.

FIG. 22 is a block diagram of an apparatus for communication provided in an exemplary implementation of the disclosure. The apparatus is applied to a terminal device or a base station. The terminal device or the base station is provided with a service interface, and the service interface is configured to connect the terminal device or the base station with a second network element in a core network. The apparatus includes a transmitting module 2201 and a receiving module 2202. The transmitting module 2201 is configured to transmit a request message to the second network element by invoking the service interface, where the request message is used to invoke a service provided by the second network element. The receiving module 2202 is configured to receive a reply message for the request message by invoking the service interface, where the reply message for the request message is transmitted by the second network element.

In some implementations, the service interface is a service based interface (SBI).

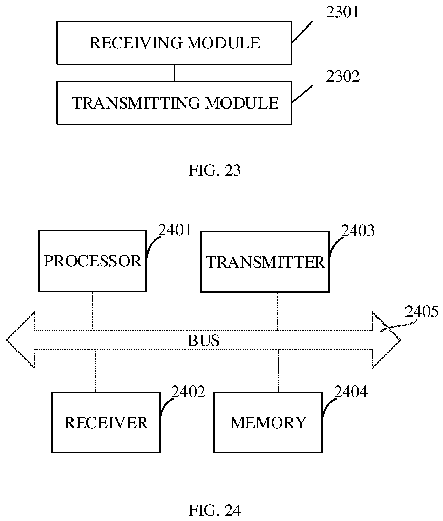

FIG. 23 is a block diagram of an apparatus for communication provided in an exemplary implementation of the disclosure. The apparatus is applied to a second network element. A terminal device or a base station is provided with a service interface, and the service interface is configured to connect the terminal device or the base station with the second network element in a core network. The apparatus includes a receiving module 2301 and a transmitting module 2302. The receiving module 2301 is configured to receive, by invoking the service interface, a request message transmitted by the terminal device or the base station, where the request message is used to invoke a service provided by the second network element. The transmitting module 2302 is configured to transmit, by invoking the service interface, a reply message for the request message to the terminal device or the base station that transmits the request message.

In some implementations, the service interface is an SBI.

FIG. 24 is a schematic structural diagram of a communication device provided in an exemplary implementation of the disclosure. The communication device includes a processor 2401, a receiver 2402, a transmitter 2403, a memory 2404, and a bus 2405.

The processor 2401 includes one or more processing cores, and the processor 2401 executes various function applications and information processing by running software programs and modules.

The receiver 2402 and the transmitter 2403 may be implemented as a communications component, which may be a communication chip.

The memory 2404 is connected with the processor 2401 through the bus 2405.

The memory 2404 may be configured to store at least one instruction, and the processor 2401 is configured to execute the at least one instruction to implement each operation in the foregoing method implementations.

In some implementations, the communication device may be a network element, a first device, a second device, a terminal device, or a base station.

In addition, the memory 2404 may be implemented by any type of volatile or non-volatile storage device or a combination thereof. The volatile or non-volatile storage device includes, but is not limited to, a magnetic disk or an optical disk, an electrically erasable programmable read-only memory (EEPROM), an erasable programmable read-only memory (EPROM), a static random-access memory (SRAM), a read-only memory (ROM), a magnetic memory, a flash memory, and a programmable read-only memory (PROM).

In an exemplary implementation, a computer-readable storage medium is further provided. The readable storage medium stores an executable program code, and the executable program code is loaded and executed by the processor, to implement each method for communication executed by a communication device according to each of the foregoing method implementations.

In an exemplary implementation, a chip is further provided. The chip includes a programmable logic circuit and/or a program instruction. When the chip runs on a communication device, the chip is configured to implement the methods for communication.

In an exemplary implementation, there is also provided a computer program product for implementing each of the forgoing methods for communication when the computer program product is executed by a processor of a communication device.

Persons of ordinary skill in the art may understand that all or a part of the operations of the foregoing implementations may be implemented by hardware, and may also be implemented by a program instructing relevant hardware. The program may be stored in a computer-readable storage medium. The storage medium may be a ROM, a magnetic disk, or an optical disk.

The foregoing illustrations merely illustrate optional implementations of the disclosure, but are not intended to limit the disclosure. Any modification, equivalent replacement, or improvement made within the spirit and principle of the disclosure shall fall in the scope of protection of the disclosure.

## Claims

1. A method for communication, being applicable to a first network element and comprising:
receiving a first container transmitted by a first device, the first container containing a first request message, and the first request message being used to request invocation of a service of a second device; and
transmitting the first container to the second device.

2. The method of claim 1, wherein transmitting the first container to the second device comprises:
determining the second device according to identification information of the second device contained in a message header of the first container, and transmitting the first container to the second device; or
determining the second device according to the first request message contained in the first container, and transmitting the first container to the second device.

3. The method of claim 1, further comprising:
receiving a second container transmitted by the second device, wherein the second container contains a first reply message for the first request message; and
transmitting the second container to the first device.

4. The method of claim 3, wherein transmitting the second container to the first device comprising:
determining the first device according to identification information of the first device contained in a message header of the second container, and transmitting the second container to the first device; or
determining the first device according to the first reply message contained in the second container, and transmitting the second container to the first device.

5. The method of any one of claims 1 to 4, wherein the first request message is recognizable by the second device.

6. The method of any one of claims 1 to 5, wherein one of the first device and the second device is a network element in a core network, and the other of the first device and the second device is a terminal device or a base station.

7. A method for communication, being applicable to a first device and comprising:
transmitting a first container to a first network element, the first container containing a first request message, and the first request message being used to request invocation of a service of a second device;
the first network element being configured to receive the first container transmitted by the first device and transmit the first container to the second device.

8. The method of claim 7, further comprising:
receiving a second container transmitted by the first network element, wherein the second container contains a first reply message for the first request message.

9. The method of claim 7 or claim 8, wherein the first request message is recognizable by the second device.

10. The method of any one of claims 7 to 9, wherein one of the first device and the second device is a network element in a core network, and the other of the first device and the second device is a terminal device or a base station.

11. A method for communication, being applicable to a second device and comprising:
receiving a first container transmitted by a first network element, the first container containing a first request message, the first request message being transmitted by a first device and used to request invocation of a service of the second device, and the first request message being recognizable by the second device.

12. The method of claim 7, further comprising:
transmitting a second container to the first network element, wherein the second container contains a first reply message for the first request message.

13. The method of claim 11 or 12, wherein the first request message is recognizable by the second device.

14. The method of any one of claims 11 to 13, wherein one of the first device and the second device is a network element in a core network, and the other of the first device and the second device is a terminal device or a base station.

15. A method for communication, being applicable to a first network element and comprising:
receiving a first request message transmitted by a first device;
generating a second request message according to the first request message, the second request message being used to request invocation of a service of the second device; and
transmitting the second request message to the second device.

16. The method of claim 15, wherein the first request message is unrecognizable by the second device, and the second request message is recognizable by the second device.

17. The method of claim 15 or 16, wherein the first request message contains at least one of an invoked service type or identification information of a service provider.

18. The method of claim 15, further comprising:
receiving a first reply message for the second request message, wherein the second request message is transmitted by the second device;
generating a second reply message according to the first reply message, wherein the second reply message is a reply message for the first request message; and
transmitting the second reply message to the first device.

19. The method of claim 18, wherein the first reply message is unrecognizable by the first device, and the second reply message is recognizable by the first device.

20. The method of any one of claims 15 to 19, wherein one of the first device and the second device is a network element in a core network, and the other of the first device and the second device is a terminal device or a base station.

21. A method for communication, being applicable to a first device and comprising:
transmitting a first request message to a first network element, the first request message being used to request invocation of a service of a second device, the first network element being configured to receive the first request message transmitted by the first device, generate a second request message according to the first request message, and transmit the second request message to the second device, and the second request message being used to request invocation of the service of the second device.

22. The method of claim 21, wherein the first request message is unrecognizable by the second device, and the second request message is recognizable by the second device.

23. The method of claim 21, wherein the first request message contains at least one of an invoked service type or identification information of the second device.

24. The method of claim 21, further comprising:
receiving a second reply message transmitted by the first network element, wherein the second reply message is generated by the first network element according to a first reply message, and the first rely message is a reply message for the second request message and t is received by the first network element from the second device.

25. The method of claim 24, wherein the first reply message is unrecognizable by the first device, and the second reply message is recognizable by the first device.

26. The method of any one of claims 21 to 25, wherein one of the first device and the second device is a network element in a core network, and the other of the first device and the second device is a terminal device or a base station.

27. A method for communication, being applicable to a second device and comprising:
receiving a second request message transmitted by a first network element, the first network element being configured to receive a first request message transmitted by a first device, generate the second request message according to the first request message, and transmit the second request message to the second device, and the second request message being used to request invocation of a service of the second device.

28. The method of claim 27, wherein the first request message is unrecognizable by the second device, and the second request message is recognizable by the second device.

29. The method of claim 27, wherein the first request message contains at least one of an invoked service type or identification information of the second device.

30. The method of claim 27, further comprising:
transmitting to the first network element a first reply message for the second request message.

31. A method for communication, being applicable to a terminal device or a base station, the terminal device or the base station being provided with a service interface, the service interface being configured to connect the terminal device or the base station with a second network element in a core network, and the method comprising:
transmitting a request message to the second network element by invoking the service interface, the request message being used to invoke a service provided by the second network element; and
receiving a reply message for the request message by invoking the service interface, the reply message for the request message being transmitted by the second network element.

32. The method of claim 31, wherein the service interface is a service based interface (SBI).

33. A method for communication, being applicable to a second network element, a terminal device or a base station being provided with a service interface, the service interface being configured to connect the terminal device or the base station with the second network element in a core network, and the method comprising:
receiving, by invoking the service interface, a request message transmitted by the terminal device or the base station, the request message being used to invoke a service provided by the second network element; and
transmitting, by invoking the service interface, a reply message for the request message to the terminal device or the base station that transmits the request message.

34. The method of claim 33, wherein the service interface is a service based interface (SBI).

35. An apparatus for communication, being applicable to a first network element and comprising:
a receiving module configured to receive a first container transmitted by a first device, the first container containing a first request message, and the first request message being configured to request invocation of a service of a second device; and
a transmitting module configured to transmit the first container to the second device.

36. An apparatus for communication, being applicable to a first device and comprising:
a transmitting module configured to transmit a first container to a first network element, the first container containing a first request message, and the first request message being used to request invocation of a service of a second device;
the first network element being configured to receive the first container transmitted by the first device, and transmit the first container to the second device.

37. An apparatus for communication, being applicable to a second device and comprising:
a receiving module configured to receive a first container transmitted by a first network element, the first container containing a first request message, the first request message being transmitted by a first device and used to invoke a service of the second device, and the first request message being recognizable by the second device.

38. An apparatus for communication, being applicable to a first network element and comprising:
a receiving module configured to receive a first request message transmitted by a first device;
a generating module configured to generate a second request message according to the first request message, the second request message being configured to request invocation of a service of a second device; and
a transmitting module configured to transmit the second request message to the second device.

39. An apparatus for communication, being applicable to a first device and comprising:
a transmitting module configured to transmit a first request message to a first network element, the first request message being used to request invocation of a service of a second device, the first network element being configured to receive the first request message transmitted by the first device, generate a second request message according to the first request message, and transmit the second request message to the second device, and the second request message being used to request invocation of the service of the second device.

40. An apparatus for communication, being applicable to a second device and comprising:
a receiving module configured to receive a second request message transmitted by a first network element, the first network element being configured to receive a first request message transmitted by the first device, generate the second request message according to the first request message, and transmit the second request message to the second device, and the second request message being used to request invocation of a service of the second device.

41. An apparatus for communication, being applicable to a terminal device or a base station, the terminal device or the base station being provided with a service interface, the service interface being configured to connect the terminal device or the base station with a second network element in a core network, and the apparatus comprising:
a transmitting module configured to transmit a request message to the second network element by invoking the service interface, the request message being used to invoke a service provided by the second network element; and
a receiving module configured to receive a reply message for the request message by invoking the service interface, the reply message for the request message being transmitted by the second network element.

42. An apparatus for communication, being applicable to a second network element, a terminal device or a base station being provided with a service interface, the service interface being configured to connect the terminal device or the base station with the second network element in a core network, and the apparatus comprising:
a receiving module configured to receive, by invoking the service interface, a request message transmitted by the terminal device or the base station, the request message being used to invoke a service provided by the second network element; and
a transmitting module configured to transmit, by invoking the service interface, a reply message for the request message to the terminal device or the base station that transmits the request message.

43. A network element comprising:
a processor;
a transceiver coupled with the processor; and
a memory storing executable program codes for the processor;
the processor being configured to load and execute the executable program codes to implement the method for communication of any one of claims 1 to 6, the method for communication of any one of claims 15 to 20, or the method for communication of any one of claims 33 to 34.

44. A first device comprising:
a processor;
a transceiver coupled with the processor; and
a memory storing executable program codes for the processor;
the processor being configured to load and execute the executable program codes to implement the method for communication of any one of claims 7 to 10 or the method for communication of any one of claims 21 to 26.

45. A second device comprising:
a processor;
a transceiver coupled with the processor; and
a memory storing executable program codes for the processor;
the processor being configured to load and execute the executable program codes to implement the method for communication of any one of claims 11 to 14 or the method for communication of any one of claims 27 to 30.

46. A computer-readable storage medium storing executable program codes, the executable program codes being loaded and executed by a processor to implement the method of any one of claims 1 to 34.
